# EUROPEAN PATENT SPECIFICATION

(11) **EP 1 693 486 B1**
(45) Date of publication and mention of the grant of the patent: **29.04.2009**
(21) Application number: 06008886.1
(22) Date of filing: 09.02.2001
(51) Int. Cl.: C25C 3/08, C25C 3/12, C04B 41/87

(54) **A method for providing a protective coating for carbonaceous components of an electrolysis cell**
Verfahren zum Auftragen einer Schutzbeschichtung auf Kohlenstoffenthaltenden Bestandteilen von Elektrolysezellen
Procédé pour munir des constituants carbonés d'une cellule d'électrolyse d'un revêtement protecteur

(30) Priority: 16.02.2000 US 183062 P
(43) Date of publication of application: 23.08.2006
(62) Divisional of application: 01905533.4
(73) Proprietor: ALCAN INTERNATIONAL LIMITED, Montreal Quebec H3A 3G2 (CA)
(72) Inventor: Mirchi, Amir A., Jonquière Quebec G7S 5N3 (CA); Bergeron, Jules, Jonquière Quebec G7X 9B6 (CA)
(74) Representative: Gaunt, Robert John

(56) References cited:
- WO-A-83/00325
- FR-A- 2 453 839
- US-A- 4 192 730
- US-A- 5 486 278
- DATABASE CHEMABS [Online] CHEMICAL ABSTRACTS SERVICE, COLUMBUS, OHIO, US; IOZON, CARMEN ET AL: "Coating carborundum refractories to prevent oxidation and decomposition of silicon carbide content" XP002171603 retrieved from STN Database accession no. 133:8237 CA & RO 112 844 B1 (SC "CASIROM" SA, TURDA) 30 January 1998 (1998-01-30)
- DATABASE WPI Section Ch, Week 199110 Derwent Publications Ltd., London, GB; Class L02, AN 1991-071487 XP002171604 & SU 1 556 809 A (CHELYABINSK POLY) 15 April 1990 (1990-04-15)

## Description

### Technical Field

This invention relates to the production of protective coatings for carbonaceous components of electrolytic cells used in the production of aluminum. The invention more specifically relates to coating compositions which provide carbonaceous components of electrolytic cells with protection from deterioration during electrolysis and components containing the same.

### Background Art

The manufacture of aluminum is conducted conventionally by the Hall-Heroult electrolytic reduction process, whereby alumina is dissolved in molten cryolite and electrolyzed at temperatures of about 900 to 1000°C. This process is conducted in a reduction cell typically comprising a steel shell provided with an insulating lining of suitable refractory material, which is in turn provided with a lining of carbon which contacts the molten constituents. One or more anodes, typically made of prebaked carbon blocks, are connected to the positive pole of a direct current source, and suspended within the cell. One or more conductor bars connected to the negative pole of the direct current source are embedded in the carbon cathode substrate comprising the floor of the cell, thus causing the cathode substrate to become cathodic upon application of current.

Prebaked anodes used in the production of aluminum are comprised of an aggregate of petroleum coke with pitch as a binder, while the carbon lining is typically constructed from an array of prebaked cathode blocks, rammed together with a mixture typically comprising of anthracite, tar, and coal tar pitch.

Aluminum is produced in a molten form within an electrolysis cell as a result of the following reaction:

2Al₂O₃+3C→4Al+3CO₂

In the conventional design of the Hall-Heroult cell, aluminum collects as a pool of molten aluminum along the base of the cell. In doing so, oxygen becomes liberated and reacts with the available carbon on the surface of the anodes to produce carbon dioxide gas. Theoretically, 0.334 kg of anodic carbon is consumed per kilo of aluminum produced as represented by the above reaction. In reality, however, anodic consumption is 25-35% greater.

Excess consumption of the prebaked anodes is the result of a series of secondary reactions, which can be summarized as follows:
i) Air oxidation: oxidizing reactions result from oxygen in the air contacting the upper part of the anode and, if the anode is left unprotected, reacting to produce carbon dioxide;
ii) Boudouard reaction: carbo-oxidation reactions result from CO₂ at the surface of the anode being immersed in the electrolyte and producing carbon monoxide (known as the Boudouard equilibrium); and
iii) Dusting: the selective oxidation of pitch coke with respect to petroleum coke, results in the release of carbon particles, generating dust, which has negative effects on the operation.

The loss effected by such secondary reactions within the electrolytic cell amounts to approximately 10% of the production cost of aluminum.

The economic inefficiencies of aluminum production can be further attributed to the deterioration of the carbon lining or cathodic material of the electrolytic cell as a result of erosion and penetration of electrolyte and liquid aluminum, as well as intercalation by metallic sodium.

Although the Hall-Heroult process for aluminum production is the most reliable to date, there is a continual need for improvement. In view of the economic impact of the inefficiencies of this process, considerable effort has focused on the development of improved electrolytic cell components which are capable of withstanding the harsh conditions imposed by the electrolysis of aluminum.

For instance, U.S. Pat. No. 3,852,107 to Lorkin et al. teaches of an impermeable protective coating for electrodes comprising a matrix having a melting point under 1000 °C and a refractory filler, dissolved or suspended in a liquid carrier such as water. As an example, the matrix component of this coating was described as a graphite wettable material such as boric acid and/or a glaze forming material such as sodium aluminum fluoride. Suggested refractory fillers include oxides, carbides, nitrides or borides. The use of a suitable surface tension modifying agent such as chrome ore was suggested in certain situations to improve the wetting of the graphite.

U.S. Pat. No. 4,624,766 to Boxall, et al. describes an aluminum wettable, cured, carbonized cathode material for use in aluminum electrolysis cells, comprising a hard refractory material in a carbonaceous matrix which includes a carbonaceous filler and carbon fiber bonded by a non-graphitized amorphous carbon, this matrix having a rate of ablation essentially equal to the rate of wear and dissolution of the refractory hard material in the operating environment of the cell.

Sekhar et al., WO 98/17842 published Apr. 30, 1998, describes a method for applying a refractory boride to components of an aluminum electrolysis cell by forming a slurry of particulate preformed refractory boride in at least two grades of colloidal carriers selected from the group consisting of colloidal alumina, yttria, ceria, thoria, zirconia, magnesia, lithia, monoaluminum phosphate, cerium acetate and mixtures thereof, the two colloidal carriers preferably each being of the same colloid, followed by drying. The two grades of colloidal carrier have mean particle sizes which differ from one another by about 10-50 nanometers.

U.S. Pat. No. 5,486,278 to Manganiello discloses a method of impregnating a carbonaceous cell component with a boron-containing solution to improve resistance to deterioration during cell operation. When water was used as the solvent for the boron-containing solution, a surfactant was required to achieve an acceptable treatment time. Alternatively, the solvent could be chosen from methanol, ethylene glycol, glycerin and mixtures thereof. This method required the intake of the boron-containing solution to a depth of 1-10 cm into the component to be protected. This patent further disclosed that the air oxidation of carbonaceous components treated in this manner was comparable to the net consumption of similar components treated with traditional aluminum protective coatings.

PCT publication WO 83/00325 published on February 3, 1983, discloses TiB₂-carbon composites produced by mixing raw materials comprised of carbon, TiB₂, pitch, and other reactants, forming a shaped article, and then processing the article in a nitrogen atmosphere up to 2100°C, and in a noble gas above 2100°C, by pressureless sintering of TiB₂ or other refractory hard metal powder, or by molding or extrusion of plastic mixes of binder and particulate carbon and refractory hard metal.

Romanian patent RO 112844 of January 30, 1998 discloses a protective material containing calcined Al2O3 and refractory kaolin in 1:1 ratio. The particles are kept in suspension by adding 1-3% of deflocculant chosen from Na lignosulfonate and CN-cellulose. The protective material is deposited on a refractory surface of carborundum by spraying with compressed air and adhesion and fixation of the coating is assured by the addition of 1-5% of an agent composed of 62-70% Al₂O₃ and 23-26% CaO before drying for two hours at 80° and 24 hours at 22-23°.

Despite previous efforts, conventional techniques for performing the electrolysis of aluminum are still employed most often. This indicates that a more technically superior or economically profitable method of combating carbonaceous cell component deterioration is not known.

Lignosulfonates, such as ammonium lignosulfonate, have long been used as binders in a variety of different industries but not in aluminum electrolysis cells.

It is an object of the present invention to provide an effective and economical method of treating components of an electrolytic cell, for producing aluminum, to protect them from deterioration during operation of the cell.

### Disclosure of the Invention

The present invention in its broadest aspect relates to a method of treating a carbonaceous cell component of an electrolytic cell for the production of aluminum, to improve the resistance of the component to deterioration during operation of the cell. The method comprises preparing a liquid suspension of a refractory boride dispersed in a lignosulfonate binder solution and applying the liquid as a protective coating to the carbonaceous cell component, followed by drying the coating.

As a by-product of the pulp and paper industry, lignosulfonate is both abundant and relatively inexpensive. It has been found to be surprisingly effective as a binder in the harsh environment of an aluminum electrolysis cell.

In accordance with a further embodiment of the invention, the lignosulfonate binder is used for coating carbon cathode structures of an aluminum electrolysis cell. For this purpose, a liquid suspension is prepared of a refractory boride, e.g. titanium diboride, a lignosulfonate binder and a phenolic resin binder. This liquid suspension is then applied as a protective coating to the cathode structure, followed by drying.

### Best Modes for Carrying Out the Invention

As the formulation base of the liquid suspensions of the present invention, lignosulfonate acts as a dispersant for dispersing the ingredients in the bulk liquid state, a wetting agent for even application of the coating and a binder to create a continuous layer of suspended solids which effectively adheres to the carbonaceous surface.

A preferred embodiment of the invention relates to a process for protecting the exposed surface of cathode blocks in an aluminum electrolysis cell, by applying a coating comprising a refractory boride (e.g. titanium diboride) dispersed in a mixture of lignosulfonate and phenolic resin. Such a coating provides wetting properties and erosion resistance as well as significantly reducing the deterioration of the underlying layers due to sodium and bath penetration. This coating mixture typically contains about 5 to 40% by weight lignosulfonate (50% solution), about 5 to 40% by weight phenolic resin, about 20 to 70% by weight titanium diboride and 0 to 5% anthracite (or graphite). A more preferred composition contains about 14 to 20% lignosulfonate (50%), about 14 to 20% by weight phenolic resin and about 50 to 70% by weight titanium diboride and 2% to 5% by weight anthracite (<74 µm (micron)). While titanium boride is the preferred material for this purpose, a wide variety of refractory borides may be used, e.g. zirconium, vanadium, hafnium, niobium, tantalum, chromium or molybdenum boride.

This coating mixture is preferably applied to a thickness of about 1-3 mm with a spray gun at 827 KPa (120 psi) pressure and the coated cathode is first air dried at room temperature for about 10 hours. Although, it is possible to increase the lifetime of the coating by increasing the thickness to 10-15 mm by applying many layers of the coating. Between each layer, the coating could be dried by a heating system at about 100-150 °C. The coated cathode is then preheated as a part of normal cell start-up. In preparation for the preheat, the cathode is covered with a 10cm (4 inch) layer of coke (no bath) and the anodes are lowered until they rest on the coke layer. A current is then applied and under these conditions the coating will reach a temperature of about 1000°C, in about 25 hours.

The above composition provides a wettable surface for the metal and not only protects the exposed cathode surface from deterioration, but also reduces the absorption of sodium by the cathode lining in general and reduces the oxidation of the side wall blocks, when applied to these areas.

### BRIEF DESCRIPTION OF THE DRAWING

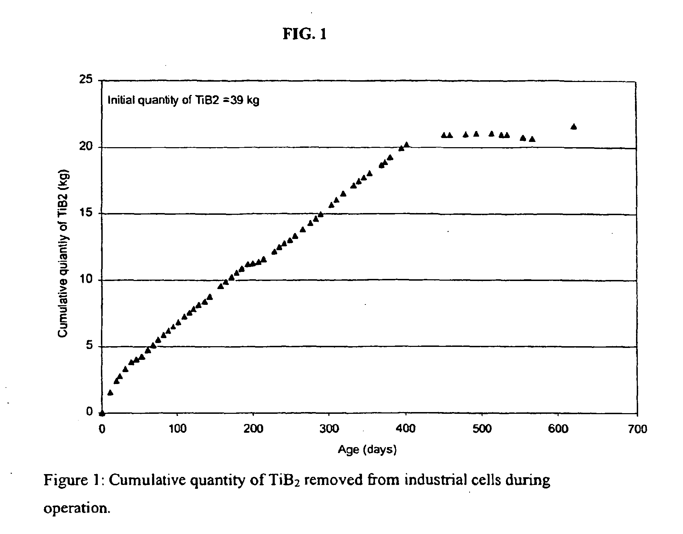

FIG. 1 is a plot showing the cumulative quantity of TiB₂ removed from an aluminum electrolysis over a period of time.

### EXAMPLE 1

A series of coating compositions were prepared for application to cathode structures. The lignosulfonate and phenolic resin were as follows. The lignosulfonate was a 50% liquid preparation (NORLIG TSFL^{™}) obtained from Borregaard Lignotech, Bridgewater, N.J. In liquid state, the lignosulfonate has a pH range of 4-5 and comprises 47.5 to 51.5% solids. The phenolic resin binder was DURITE Phenolic Resin RL-2360B. The compositions contained by weight 60% titanium diboride, 5% anthracite (<74 µm (micron)), 17.5% of phenolic resin and 17.5% of ammonium lignosulfonate solution (50% wt.). Some also contained 74 µm (-200 mesh) anthracite. They were prepared as viscous dispersions fluid enough to be applied by spraying.

Using a spray gun at 827 KPa (120 psi) pressure the compositions were sprayed onto exposed surfaces of cathodes. The coatings were dried, pre-heated and subjected to electrolysis tests at 900 °C for up to 100 hours. After this test, the total surface of the coated cathode sample was wetted by aluminum and no erosion was observed.

### EXAMPLE 2

Plant tests using 6 full scale electrolysis cells have been completed with the following coating composition: 17.5% phenolic resin, 17.5% ammonium lignosulfonate solution (50%), 60% TiB₂ and 5% anthracite (<74 µm (micron)). The cathodic surface (bottom blocks, monolithic ramming paste and sidewall block) was covered by about 60 to 70 kg of coating in total for all of the test cells. The thickness of this coating was about 1 mm. The concentration of the Ti and B in the aluminum produced by the 6 test cells was compared with the levels in 6 control cells to determine the coating lifetime during cell operation. Based on these results the lifetime of a coating having a one mm thickness is about 350-400 days. It is know that during cell operation the carbon cathode erosion rate without the coating is about 15 to 30 mm per year. Figure 1 presents the cumulative quantity of TiB₂ remove from the test cells based on the concentration of Ti and B in the aluminum. The plant test demonstrates that the erosion rate of coated cathode blocks is lower than 1 mm/year, which is much lower than the erosion rate for uncoated blocks.

## Claims

1. A method of treating a carbonaceous cell component of an electrolytic cell for the production of aluminum, to improve the resistance of said component to deterioration during operation of the cell, which comprises preparing a liquid suspension of a refractory boride dispersed in a lignosulfonate binder solution, applying the suspension as a coating to the surface of said carbonaceous cell component and thereafter drying the coating.

2. The method of claim 1 wherein the liquid suspension also contains a phenolic resin binder.

3. The method of claim 1 wherein the refractory boride is titanium diboride.

4. The method of any one of claims 1 to 3 wherein the lignosulfonate binder comprises an ammonium or calcium salt.

5. A method of claim 1 which comprises preparing a liquid suspension of a refractory boride, a lignosulfonate binder and a phenolic resin binder and applying the liquid suspension as a protective coating to the cathode structures, followed by drying.

6. The method of claim 5 wherein the refractory boride is a boride of titanium, zirconium, vanadium, hafnium, niobium, tantalum, chromium or molybdenum.

7. The method of claim 5 wherein the refractory boride is titanium diboride.

8. The method of claim 7 wherein the suspension contains 55 to 65% titanium diboride, 0 to 5% anthracite, 15 to 20% lignosulfonate binder and 15 to 20% phenolic resin binder.

9. The method of claim 5 wherein the suspension is applied to the cathode structures by brushing, rolling or spraying.

10. A composition for coating a carbonaceous cell component of an electrolytic cell for the production of aluminum, to improve the resistance of said component to deterioration during operation of the cell, which composition comprises a liquid suspension of a refractory boride dispersed in a lignosulfonate binder solution.

11. The composition of claim 10 wherein the refractory boride is titanium diboride.

12. The composition of claims 10 or 11 wherein the lignosulfonate binder comprises an ammonium or calcium salt.

13. A composition of claim 10 for coating carbon cathode structures of an aluminum electrolysis cell, which comprises a liquid suspension of a refractory boride, a lignosulfonate binder and a phenolic resin.

14. The composition of claim 13 wherein the refractory boride is titanium diboride.

15. The composition of claim 13 wherein the suspension contains 20 to 70% titanium diboride, 5 to 40% lignosulfonate binder and 5 to 40% phenolic resin binder.

16. The composition of claim 13, 14 or 15 further comprising 0 to 5% anthracite coal.

## Patentansprüche

1. Verfahren zur Behandlung einer kohlenstoffhaltigen Zellkomponente einer Elektrolysezelle für die Herstellung von Aluminium, um die Beständigkeit der Komponente gegenüber Zersetzung während des Betriebs der Zelle zu verbessern, umfassend das Herstellen einer flüssigen Suspension von feuerfestem Borid, dispergiert in einer Ligninsulfonat-Bindemittellösung, das Aufbringen der Suspension als eine Beschichtung auf die Oberfläche der kohlenstofflialtigen Zellkomponente und danach das Trocknen der Beschichtung.

2. Verfahren nach Anspruch 1, wobei die flüssige Suspension auch ein Phenolharz-Bindemittel enthält.

3. Verfahren nach Anspruch 1, wobei das feuerfeste Borid Titandiborid ist.

4. Verfahren nach einem der Ansprüche 1 bis 3, wobei das Ligninsulfonat-Bindemittel ein Ammonium- oder Calciumsalz umfasst.

5. Verfahren nach Anspruch 1, umfassend das Herstellen einer flüssigen Suspension eines feuerfesten Borids, eines Ligninsulfonat-Bindemittels und eines Phenolharz-Bindemittels und das Aufbringen der flüssigen Suspension als eine Schutzschicht auf die Katodenstrukturen, gefolgt von Trocknen.

6. Verfahren nach Anspruch 5, wobei das feuerfeste Borid ein Borid von Titan, Zirkonium, Vanadium, Hafnium, Niob, Tantal, Chrom oder Molybdän ist.

7. Verfahren nach Anspruch 5, wobei das feuerfeste Borid Titandiborid ist.

8. Verfahren nach Anspruch 7, wobei die Suspension 55 bis 65 % Titandiborid, 0 bis 5 % Anthrazit, 15 bis 20 % Ligninsulfonat-Bindemittel und 15 bis 20 % Phenolharz-Bindemittel enthält.

9. Verfahren nach Anspruch 5, wobei die Suspension auf die Katodenstrukturen durch Bürsten, Walzen oder Sprühen aufgebracht wird.

10. Zusammensetzung zum Beschichten einer kohlenstoffhaltigen Zellkomponente einer Elektrolysezelle für die Herstellung von Aluminium, um die Beständigkeit der Komponente gegenüber Zersetzung während des Betriebs der Zelle zu verbessern, wobei die Zusammensetzung eine flüssige Suspension eines feuerfesten Borids, dispergiert in einer Ligninsulfonat-Bindemittellösung, umfasst.

11. Zusammensetzung nach Anspruch 10, wobei das feuerfeste Borid Titandiborid ist.

12. Zusammensetzung nach den Ansprüchen 10 oder 11, wobei das Ligninsulfonat-Bindemittel ein Ammonium- oder Calciumsalz umfasst.

13. Zusammensetzung nach Anspruch 10 zum Beschichten von Kohlenstoffkatodenstrukturen einer Aluminiumelektrolysezelle, umfassend eine flüssige Suspension eines feuerfesten Borids, ein Ligninsulfonat-Bindemittel und ein Phenolharz.

14. Zusammensetzung nach Anspruch 13, wobei das feuerfeste Borid Titandiborid ist.

15. Zusammensetzung nach Anspruch 13, wobei die Suspension 20 bis 70 % Titandiborid, 5 bis 40 % Ligninsulfonat-Bindemittel und 5 bis 40 % Phenolharz-Bindemittel enthält.

16. Zusammensetzung nach Anspruch 13, 14 oder 15, ferner umfassend 0 bis 5 % Anthrazit.

## Revendications

1. Procédé de traitement d'un composant de cellule carbonée d'une cellule électrolytique pour la production d'aluminium, pour améliorer la résistance dudit composant à la détérioration pendant le fonctionnement de la cellule, qui comprend la préparation d'une suspension liquide d'un borure réfractaire dispersé dans une solution de liant lignosulfonate, l'application de la suspension sous forme de revêtement à la surface dudit composant de cellule carbonée puis le séchage du revêtement.

2. Procédé selon la revendication 1, dans lequel la suspension liquide contient également un liant de résine phénolique.

3. Procédé selon la revendication 1, dans lequel le borure réfractaire est le diborure de titane.

4. Procédé selon l'une quelconque des revendications 1 à 3, dans lequel le liant lignosulfonate comprend un sel d'ammonium ou de calcium.

5. Procédé selon la revendication 1, qui comprend la préparation d'une suspension liquide d'un borure réfractaire, d'un liant lignosulfonate et d'un liant de résine phénolique et l'application de la suspension liquide sous forme de revêtement protecteur aux structures de cathode, suivie par un séchage.

6. Procédé selon la revendication 5, dans lequel le borure réfractaire est un borure de titane, de zirconium, de vanadium, de hafnium, de niobium, de tantale, de chrome ou de molybdène.

7. Procédé selon la revendication 5, dans lequel le borure réfractaire est le diborure de titane.

8. Procédé selon la revendication 7, dans lequel la suspension contient 55 à 65 % de diborure de titane, 0 à 5 % d'anthracite, 15 à 20 % de liant lignosulfonate et 15 à 20 % de liant de résine phénolique.

9. Procédé selon la revendication 5, dans lequel la suspension est appliquée aux structures de cathode par brossage, roulage ou pulvérisation.

10. Composition pour revêtir un composant de cellule carbonée d'une cellule électrolytique pour la production d'aluminium, pour améliorer la résistance dudit composant à la détérioration durant le fonctionnement de la cellule, laquelle composition comprend une suspension liquide d'un borure réfractaire dispersé dans une solution de liant lignosulfonate.

11. Composition selon la revendication 10, dans laquelle le borure réfractaire est le diborure de titane.

12. Composition selon les revendications 10 ou 11, dans laquelle le liant lignosulfonate comprend un sel d'ammonium ou de calcium.

13. Composition selon la revendication 10, pour revêtir des structures de cathode en carbone d'une cellule d'électrolyse d'aluminium, qui comprend une suspension liquide d'un borure réfractaire, d'un liant lignosulfonate et d'une résine phénolique.

14. Composition selon la revendication 13, dans laquelle le borure réfractaire est le diborure de titane.

15. Composition selon la revendication 13, dans laquelle la suspension contient 20 à 70 % de diborure de titane, 5 à 40 % de liant lignosulfonate et 5 à 40 % de liant de résine phénolique.

16. Composition selon la revendication 13, 14 ou 15, comprenant en outre 0 à 5 % de charbon d'anthracite.
